# EUROPÄISCHE PATENTSCHRIFT

(11) **EP 1 121 774 B1**
(45) Veröffentlichungstag und Bekanntmachung des Hinweises auf die Patenterteilung: **25.06.2003**
(21) Anmeldenummer: 98954388.9
(22) Anmeldetag: 09.10.1998
(51) Int. Cl.: H04B 10/10, H04B 10/22, G06K 7/10, G08C 23/04, G01C 21/04

(54) **INFORMATIONSSYSTEM**
INFORMATION SYSTEM
SYSTEME D'INFORMATIONS

(30) Priorität: 30.09.1998 DE 19844809
(43) Veröffentlichungstag der Anmeldung: 08.08.2001
(73) Patentinhaber: Sennheiser electronic GmbH & Co. KG, 30900 Wedemark (DE)
(72) Erfinder: MEYER, Rolf, Dipl.-Ing., D-30974 Wennigsen (DE); NIEHOFF, Wolfgang, Dr.-Ing., D-30900 Wedemark (DE); ROTH, Bernd, Dr.-Ing., D-30851 Langenhagen (DE); SANDERS, Klaus, Dipl.-Ing., D-22145 Hamburg (DE); KÜHN, Hans, Dipl.-Ing., D-30900 Wedemark (DE)
(74) Vertreter: Eisenführ, Speiser & Partner
(86) Internationale Anmeldenummer: EP9806426
(87) Internationale Veröffentlichungsnummer: WO00019642

(56) Entgegenhaltungen:
- DE-A- 3 517 818
- DE-A- 3 533 705
- DE-A- 19 506 890
- DE-A- 19 616 150
- US-A- 3 660 762
- US-A- 5 264 822
- US-A- 5 406 271
- US-A- 5 877 698

## Beschreibung

Die vorliegende Erfindung bezieht sich auf ein Informationssystem zum Versorgen eines vorgegebenen Gebietes mit Informationen.

Aus der DE 35 33 705 ist ein drahtloses Informationsübertragungssystem für Ausstellungen und Museen bekannt. Bei diesem System sind an oder in der Nähe von Ausstellungsexponaten erste Infrarot-Sende-/Empfangsgeräte angeordnet. Diesen Infrarot-Sende-/Empfangsgeräten sind Speicher zugeordnet, welche anwählbare, durch Sensoren betätigbare, mehrkanalige Informationmengen in mehreren Sprachen über das jeweilige Ausstellungsexponat enthalten.

Desweiteren gehört ein von einem Besucher zu tragendes (ortsveränderliches) zweites Infrarot-Sende-/Empfangsgerät zu dem System. Das zweite Infrarot-Sende/Empfangsgerät ruft bei einem Wechsel des Besuchers von einem Standort eines Ausstellungsexponates zum Standort eines anderen die entsprechende Informationsmenge über das Ausstellungsexponat ab. Während des Betriebes dieses Informationsübertragungssystems werden den ersten Infrarot-Sende-/Empfangsgeräten über Sensoren Kodesignale über einen im zweiten Infrarot-Sende-/Empfangsgerät angeordneten Kodegeber zugeführt, welche vom Besucher über einen Start-Stop-Schalter ausgelöst, akustische und/oder visuelle Wiedergaben exponatspezifischer oder allgemeiner Informationen aus einer in dem Speicher enthaltenen Gesamtinformation selektiv aktivieren bzw. programmierte Informationsabläufe steuern.

Die US-Patentschrift 4 824 375 beschreibt eine Vorrichtung, welche zur Vergnügung, zur Ausbildung oder für eine sonstige Funktion eingesetzt werden kann, wobei die Vorrichtung akustische Informationen zu vorgegebenen Gegenständen bereithält. Die Vorrichtung umfaßt einen statischen Speicher, welcher an einer festen Position in Bezug auf den jeweiligen zu beschreibenden Gegenstand angeordnet ist und einen Nur-Lese-Speicher in welchem insbesondere die akustischen mit dem Gegenstand in Beziehung stehenden Signale digital gespeichert sind. Desweiteren umfaßt die Vorrichtung eine Wiedergabeeinheit, welche von einem Benutzer getragen wird, um die in dem Nur-Lese-Speicher gespeicherten digitalen Informationen in hörbare Informationen umzuwandeln und dem Benutzer wiederzugeben. Dazu wird die Wiedergabeeinheit mit dem statischen Speicher verbunden, so daß die digitalen Informationen an das Wiedergabegerät übertragen werden können.

Aus der deutschen Patentschrift DE 35 35 715 ist ein Verfahren zur Übermittlung von exponatspezifischen Informationen an Besucher von Ausstellungen und Museen bekannt. Bei diesem Verfahren trägt der Besucher ein Wiedergabegerät und dem jeweiligen Exponat ist ein Informationsgerät zugeordnet. Von dem Informationsgerät besteht eine Nachrichtenübertragungsstrecke zu dem Wiedergabegerät. Die exponatspezifischen Informationen sind in dem dem Exponat zugeordneten Informationsgerät digital gespeichert und stehen abrufbar zur Verfügung. Das Wiedergabegerät umfaßt einen Zwischenspeicher, einen Digital-Analog-Wandler und mindestens einen elektroakustischen Wandler oder eine entspechende Anschlußmöglichkeit. Sollen exponatspezifische Informationen wiedergegeben werden, stellt der Besucher kurzfristig eine Datenverbindung zwischen dem Wiedergabegerät und dem Informationsgerät her, so daß während dieser kurzzeitig hergestellten Datenverbindung die entsprechenden Informationen transferiert werden können. Anschließend werden diese Informationen in akustische Signale gewandelt und wiedergegben, wobei die für den Datentransfer notwendige Zeit kürzer als die für die akustische Wiedergabe notwendige Zeit ist.

Aus DE 3 517 818 ist ein Verfahren zur Wiedergabe von objekt-spezifischen Information bekannt, die von einem Handgerät wiedergegeben werden, das diese bei Empfang eines Codes aus vorgespeicherten Informationen auswählt.

Die deutsche Offenlegungsschrift DE 195 06 890 beschreibt ein auf einem Datenträger gespeichertes Reiseinformationssystem zur akustischen und/oder optischen Wiedergabe von Informationen über Landschaften, Bauwerke, Städte oder historisch-künstlerische Ereignisse und Beschreibungen für Reisende oder Besucher. In Abhängigkeit der zu einem bestimmten Standort oder Wegstrecke gehörenden Erdkoordinaten, welche durch Satellitensignale bekannter Systeme (z. B. GPS) bestimmt werden, werden die vorher gespeicherten Reiseinformationen wiedergegeben.

Bei allen diesen Systemen führt der Benutzer ein tragbares Wiedergabegerät mit sich, mit welchem Informationen über bestimmte Gegenstände, Exponate oder dergleichen wiedergegeben werden können. Bei einer Gruppe bekannter Systeme muß der Benutzer jedoch zuvor am Standort des Gegenstandes die gewünschten Information auf sein Wiedergabegerät übertragen bekommen. Dazu wird das Wiedergabegerät kurzzeitige mit einer Speichereinrichtung, welche in der Nähe des Gegenstandes angeordnet ist, gekoppelt, und die gewünschte Information wir von der Speichereinrichtung an das Wiedergabegerät übertragen. Der Benutzer muß also stets eine Datenübertragungsverbindung herstellen, bevor die gewünschte Information durch das Wiedergabegerät wiedergegeben werden kann.

Werden solche Datenübertragungsverbindungen mit elektrischen Steckverbindungen realisiert, kann es zu Kontaktproblemen und damit zu einer gestörten Datenübertragung kommen. Dies gilt insbesondere bei einer starken Benutzung der Steckverbindungen, wie sie bei Museen oder anderen öffentlichen Gebäuden zu erwarten ist. Desweiteren ist zu erwarten, daß der praktische Aufbau der Datenübertragungsverbindung mittels der Steckverbindungen immer wieder Anlaßzu Fragen seitens der Besucher gibt, so daß möglicherweise häufig Hilfestellung geleistet werden muß.

Eine Verbesserung verspricht der Einsatz einer Infrarot-Datenübertragungsverbindung. Bei einer solchen Verbindung werden insbesondere Probleme aufgrund von Verschleiß und komplizierter Bedienbarkeit umgangen. Als nachteilig erweist sich jedoch auch bei dieser Alternative, daß der Benutzer sich zur Übertragung der gewünschten Informationen in der Nähe der entsprechenden Infrarot-Sendeeinrichtung aufhalten und solange dort verweilen muß, bis die Übertragung abgeschlossen ist.

Darüber hinaus muß der Benutzer eine merkliche Zeitverzögerung in Kauf nehmen, bis nach Ankunft an einem interessierende Gegenstand eine Wiedergabe der übertragenen Informationen stattfinden kann.

Eine sofortige Wiedergabe von Informationen kann dadurch erreicht werden, daß diese bereits vor Beginn einer Besichtigungstour im Wiedergabegerät gespeichert sind. Dies kann beispielsweise durch den Einsatz von digitalen Speichermedien, wie beispielsweise einer CD-ROM geschehen. Bei dieser Variante muß jedoch der Benutzer regelmäßig das Wiedergabegerät bzw. das darin enthaltene Speichermedium austauschen, wenn er sich in einen Bereich begibt, über den keine Informationen in dem Speichermedium vorliegen.

Aufgabe der vorliegenden Erfindung ist es, ein Informationssystem zum Versorgen eines vorgegebenen Gebietes mit Informationen zur Verfügung zu stellen, bei welchem auf flexible Weise einem Benutzer für diesen interessante Informationen bereitgestellt und wiedergegeben werden können und die beschriebenen Nachteile vermieden werden. Schließlich soll ein für Benutzer in jeder Hinsicht attraktives Informationssystem zur Verfügung gestellt werden, weches auch unter Kostengesichtspunkten akzeptabel ist.

Die Aufgabe wird erfindungsgemäß durch ein Informationssystem gelöst, welches eine Sendeeinrichtung zum Senden von Informationen in digital kodierter Form und ein Handgerät umfaßt, welches eine Empfangseinrichtung zum Empfangen der von der Sendeeinrichtung gesendeten Informationen, eine digitale Speichereinrichtung zum Speichern der empfangenen Informationen, welche vorzugsweise unlösbar in der Empfangseinrichtung eingebaut ist , eine Wiedergabeeinrichtung zum Wiedergeben der gespeicherten Informationen, insbesondere auf akustische und/oder optische Weise, und einer Ereigniserkennungseinrichtung zum Erkennen bestimmter Ereignisse, umfaßt, wobei bei Erkennen eines Ereignisses aus den gespeicherten Informationen diejenigen für eine Wiedergabe ausgewählt werden, welche dem erkannten Ereignis zugeordnet sind.

Außerdem wird die Aufgabe erfindungsgemäß durch ein Verfahren zum Versorgen eines vorgegebenen Gebietes mit Informationen gelöst, bei welchem Informationen in digital kodierter Form von einer Sendeeinrichtung gesendet und von einer in einem Handgerät enthaltenen Empfangseinrichtung empfangen und in einer digitalen Speichereinrichtung des Handgerätes gespeichert werden, wobei bei Erkennen eines Ereignisses aus den gespeicherten Informationen diejenigen für eine Wiedergabe, insbesondere auf akustische oder optische Weise, ausgewählt werden, welche dem erkannten Ereignis zugeordnet sind.

Die Vorteile der vorliegenden Erfindung liegen insbesondere darin, daß für einen Benutzer relevante Informationen ohne dessen Zutun an das Handgerät übertragen werden. Der Benutzer kann sich somit frei in dem von dem Informationssystem überdeckten Gebiet bewegen und wird stets mit Informationen versorgt. Es ist ebenfalls möglich, das von dem Informationssystem versorgte Gebiet zu vergrößern, ohne daß Veränderungen am Handgerät, wie beispielsweise Austausch eines statischen Speichers, durchgeführt werden müßten. Der Nutzer muß ebenfalls nicht ständig Datenübertragungsverbindungen zu seinem Handgerät aufbauen, um neue Informationen laden zu können.

Bei einer bevorzugten Ausführungsform des Informationssystems erfolgt die Übertragung der Information von der Sendeeinrichtung zur Empfangseinrichtung schneller als eine anschließende Wiedergabe durch die Wiedergabeeinrichtung. Es können somit in vergleichsweise kurzer Zeit alle notwendigen Informationen an das Handgerät übertragen werden und stehen dann sofort zur Wiedergabe bereit.

Bei einer vorteilhaften Weiterbildung werden die Informationen in mehreren Sprachen ausgestrahlt. Dadurch können vorteilhafterweise ebenfalls ausländische Gäste, beispielsweise einer Messe, einer Ausstellung oder eines Museums, Informationen in Ihrer Landessprache erhalten. Bei einer vorteilhaften Weiterbildung weist das Handgerät eine Auswahleinrichtung zum Auswählen einer der Sprachen, in denen die Informationen gesendet werden, auf. Jeder Benutzer kann somit individuell festlegen, in welcher Sprache ihm die Informationen wiedergegeben werden sollen. Um eine unnötige Belegung der digitalen Speichereinrichtung des Handgerätes zu vermeiden, werden bei einer zweckmäßigen Weiterbildung lediglich diejenigen Informationen gespeichert, welche die mittels der Auswahleinrichtung ausgewählten Sprache aufweisen.

Bei einer bevorzugten Ausführungsform des Informationssystems umfaßt die Ereigniserkennungseinrichtung eine Standortbestimmungseinrichtung zum Bestimmen des aktuellen Standortes, z.B. per GPS (Global Positioning System), wobei das Ereignis, zu welchem die zugeordneten Informationen ausgewählt werden, im Erreichen eines bestimmten Standortes liegt. Zum Bestimmen des Standortes empfängt die Standortbestimmungseinrichtung beispielsweise Signale, welche von Signalgebern ausgesandt werden, die in dem Gebiet an vorgegebenen Standorten angeordnet sind. Bei derartigen Signalgebern kann es sich um Infrarot-Sender und/oder Induktionsgeber handeln, welche jeweils ein den Standort kennzeichnendes Signal aussenden.

Besonders bevorzugt ist das Gebiet in mehrere Informationsinseln aufgeteilt, in denen jeweils eine Sendeeinrichtung angeordnet ist. Zweckmäßigerweise sendet die Sendeeinrichtung jeweils die Informationen, welche Ereignissen zugeordnet sind, die in der jeweiligen Informationsinsel auftreten können. Durch einen solchen modularen Aufbau des Informationssystems kann ein kleines Gebiet besonders wirtschaftlich mit einem lediglich eine Informationsinsel aufweisenden Informationssystem ausgestattet werden, und ein großes Gebiet läßt sich durch mehrere solcher Informationsinseln modular aufbauen.

Das erfindungsgemäße Informationssystem umfaßt wenigstens eine Sendeeinrichtung, welche mehrsprachige Informationen in digital kodierter Form auf einem oder mehreren Sendekanälen ausstrahlt. Tragbare Handgeräte sind mit einer Empfangseinrichtung ausgestattet, welche die digital kodierten Informationen empfangen können. Die empfangenen Informationen können dann einem Nutzer durch eine in dem Handgerät integrierte Wiedergabeeinrichtung, insbesondere auf akustische Weise, zugänglich gemacht werden. Daneben ist es mit dem erfindungsgemäßen Informationssystem möglich, beliebige andere Daten in digitalisierter Form zu dem Handgerät zu transferieren. Solche Daten können beispielsweise direkt oder nach Zwischenspeicherung im Handgerät an einen (tragbaren) Computer übermittelt werden, der zu diesem Zweck mit dem Handgerät in Verbindung tritt. Durch eine solche Kombination aus Handgerät und Computer kann beispielsweise an Bushaltestellen in übersichtlicher Weise über Fahrpläne usw. informiert werden.

Der Nutzer kann am Handgerät eine der Sprachen, in denen die Informationen gesendet werden, auswählen. Dies kann beispielsweise bewirken, daß das Handgerät von allen gesendeten Informationen lediglich diejenigen empfängt und wiedergibt, welche in der ausgewählten Sprache ausgestrahlt werden. Alternativ können auch die Informationen in mehreren Sprachen empfangen werden, wobei von diesen jedoch nur diejenigen wiedergegeben werden, welche die ausgewählte Sprache aufweisen.

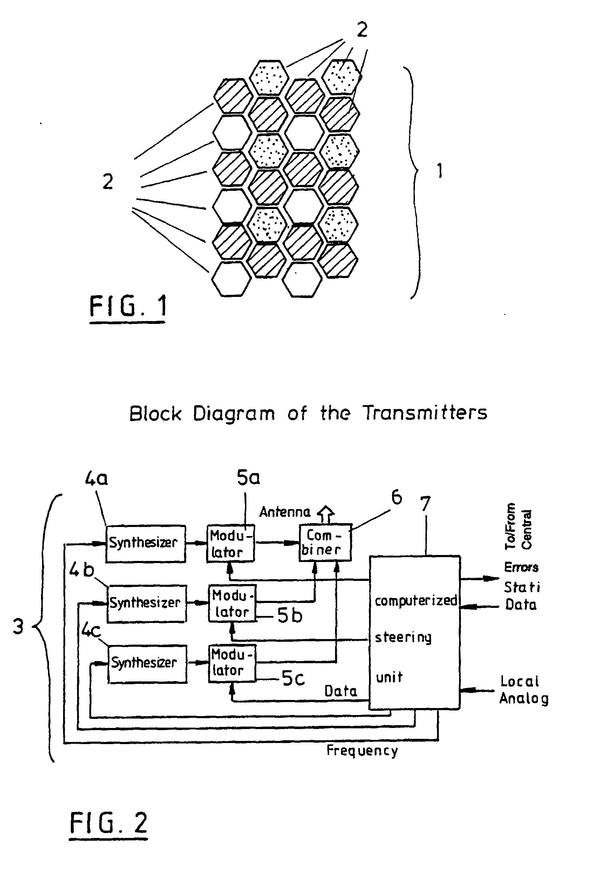

Fig. 1 zeigt schematisch ein Gebiet 1, beispielsweise eine Stadt, ein Flughafen, ein Messegelände, ein Museum usw., welches durch das erfindungsgemäße Informationssystem mit Informationen versorgt wird. Dabei kann das Gebiet 1 in mehrere Informationsinseln 2 aufgeteilt sein, denen jeweils eine Sendeeinrichtung zugeordnet ist.

Die Grenzen zwischen benachbarten Informationsinseln werden insbesondere durch Begrenzen der Sendeleistung der jeweiligen Sendeeinrichtungen, durch eine vorgegebene Antennencharakteristik einer Sendeantenne und/oder durch Beeinflussung des Wellenausbreitungsverhaltens, beispielsweise durch Abschirmungen usw., festgelegt. Darüberhinaus arbeiten die Sendeeinrichtungen benachbarter Informationsinseln auf unterschiedlichen Frequenzen und/oder mit verschiedenen (Quellenund/oder Kanal-)Kodierungen.

Die übertragenen Informationen teilen sich in einzelne Informationsbeiträge auf, welche beispielsweise Dokumentationen zu einzelnen Objekten an bestimmten Standorten, allgemeine Hintergrundinformationen, personenbezogene Mitteilungen oder live übertragene Informationen, insbesondere Ansagen, Warnhinweise, Musik-Programme, etc., sind.

Die einem Nutzer des Informationssystems mittels eines Handgerätes 11 zugänglichen Informationen werden entsprechend ihrer Verfügbarkeit in verschiedene Gruppen unterteilt, welche mit unterschiedlichen Sendemodi ausgestrahlt werden. Es werden dabei ereignisgesteuerte oder standortbezogene Informationen, Live-Informationen und personenbezogene Informationen unterschieden.

Ereignisgesteuerte oder standortbezogene Informationen sind für den Nutzer an bestimmten Standorten von Interesse, z.B. Informationen über weitere Transportmöglichkeiten, wenn sich der Nutzer in der Ankunftshalle eines Flughafens befindet, Informationen zu einem Exponat direkt bei diesem in einem Museum oder Informationen zu einem Messestand genau an dessen Standort.

Derartige Informationen werden lediglich von der Sendeeinrichtung derjenigen Informationsinsel verbreitet, in welcher sich der entsprechende Standort befindet, auf den sich der jeweilige Informationsbeitrag bezieht. Die einzelnen Informationsbeiträge werden wiederholt ausgestrahlt und in dem Handgerät in einer integrierten Speichereinrichtung gespeichert, wobei bereits zuvor in anderen Informationsinseln gespeicherte standortbezogene Informationen durch die aktuellen ersetzt werden. Alle standortbezogenen Informationsbeiträge einerinformationsinsel, in der sich der Nutzer mit dem Handgerät befindet, werden zumindest teilweise, möglichst komplett gespeichert, auch wenn diese erst zu einem späteren Zeitpunkt oder vielleicht sogar überhaupt nicht wiedergegeben werden.

Die Übertragung der Informationen erfolgt dabei um ein Vielfaches schneller als deren Wiedergabe durch die Wiedergabeeinrichtung. Die laufende Wiederholung und die kurze Übertragungsdauer der Informationen gewährleisten, daß ein Nutzer kurz nach Betreten einer Informationsinsel sämtliche standortbezogenen Informationen für einen späteren Abruf in seinem Handgerät gespeichert hat.

Trotz der vielfach schnelleren Übertragung der Informationen im Vergleich zu deren Wiedergabe dauert es eine gewisse Zeitspanne, bis sämtliche Informationbeiträge einer Informationsinsel im Handgerät gespeichert sind und somit für eine direkte Wiedergabe zur Verfügung stehen. Die Zeitspanne, die vergeht, bis einem Nutzer ein bestimmter Informationsbeitrag zur Wiedergabe bereit steht, kann dadurch verringert werden, daß jeweils die Anfangsabschnitte der einzelnen Informationsbeiträge öfter, d.h. in kürzeren Zeitintervallen im Vergleich zu den verbleibenden Endabschnitten, gesendet werden. Nach einer vergleichsweise kurzen Zeitspanne stehen somit die Anfangsabschnitte sämtlicher Informationsbeiträge einer Informationsinsel zur Wiedergabe bereit. Während der Wiedergabe eines Anfangsabschnittes eines Informationsbeitrages kann dann das Handgerät den verbleibenden Endabschnitt des Informationsbeitrages laden, so daß der Endabschnitt direkt im Anschluß an den Anfangsabschnitt wiedergegeben werden kann. Für den Nutzer ergibt sich dadurch der Eindruck eines fortlaufenden Informationsbeitrages (Programmbeitrages) ohne jegliche Unterbrechung. Durch dieses Verfahren wird folglich die 'Wartezeit' auf einen bestimmten Informationsbeitrag deutlich verkürzt, im Idealfall auf weniger als 1 sek und somit kürzer als die Reaktionszeit des Benutzers.

Reicht die Speicherkapazität der im Handgerät integrierten Informationsspeichereinrichtung nicht aus, um sämtliche standortbezogenen Informationsbeiträge einer Informationsinsel und einer Sprache speichern zu können, so werden insbesondere von längeren Informationsbeiträgen jeweils nur Anfangsabschnitte gespeichert. Eine Wiedergabe der gesamten Informationsbeiträge erfolgt wie vorstehend dargestellt.

Das Handgerät umfaßt desweiteren eine Standortbestimmungseinrichtung. Die Standortbestimmungseinrichtung empfängt externe Signale zum Bestimmen des Standortes. Dies schließt sowohl die Nutzung von Navigationssystemen, als auch die Möglichkeit der Standortbestimmung durch verteilte Signalgeber ein, welche Standortkennungen aussenden. Die Signalgeber können dabei an den entsprechenden Standorten, zu denen Informationsbeiträge gesendet werden, oder gleichmäßig in der Informationsinsel verteilt angeordnet sein. Zur Standortbestimmung bzw. als auslösendes Ereignis für die Wiedergabe standortbezogener Informationen werden Standortkennungen beispielsweise durch Induktionsschleifen, Inductive Tags oder Infrarot-Sender an das Handgerät übermittelt.

Mit Hilfe des ermittelten, aktuellen Standortes bzw. der empfangenen Standortkennung werden entsprechende standortbezogene Information ausgewählt und danach entweder automatisch oder nach manueller Anforderung dem Nutzer wiedergegeben.

Unter Live-Informationen werden solche Informationsbeiträge verstanden, die zu einem bestimmten Zeitpunkt aktuell sind und deren Speicherung insofern keinen Sinn macht. Derartige Informationen werden mit einer möglichst geringen Zeitverzögerung übertragen und können direkt (live) dem Nutzer zugänglich gemacht werden - eine Zwischenspeicherung der Live-Informationen findet demnach nicht statt.

Unter diese Gruppe von Informationen fallen beispielsweise Radioprogramme (auch digital-datenprogrammiert, z.B. DAB, MPEG-Audio, AC3 etc.), Synchronfassungen von Filmen oder Aufführungen, welche gerade stattfinden, Werbung, Mitteilungen über besondere Angebote oder Gelegenheiten, Nachrichten, Wettervorhersagen usw. Aber auch inselübergreifende Hinweise, wie beispielsweise ein Feueralarm, die mit einer höheren Priorität gesendet werden können, so daß sie von allen Nutzern sofort registriert werden können. Das Informationssystem kann so eingerichtet werden, daß verschiedene Live-Informationen auf mehreren Kanälen gleichzeitig zur Verfügung stehen; jeweils in allen angebotenen Sprachen.

Live-Informationen fallen dabei in zwei Kategorien, welche unterschiedliche Übertragungsanforderungen an das Informationssystem stellen. Eine erste Kategorie bilden Live-Informationen, bei denen der Nutzer gleichzeitig optische Informationen, beispielsweise einen Video-Film, sieht. Diese erste Kategorie an Informationen (Presentation Mode) fällt in der Regel lokal in einer Informationszelle an und wird somit lokal eingespeist und direkt von der jeweiligen Sendeeinrichtung abgestrahlt. Bei Informationen der ersten Kategorie muß die Zeitverzögerung zwischen der optischen Information und der entsprechenden akustischen Information unter 10 ms liegen, um 'Lippensynchronität' zu erreichen.

Eine zweite Kategorie (Broadcast Mode) bilden Live-Informationen, welche lediglich akustische Informationen umfassen, wie beispielsweise Radioprogramme, bei denen ein 'Akteur' nicht zu sehen ist. Derartige Informationen werden normalerweise über ein Netzwerk in alle Informationsinseln verbreitet und dort ausgestrahlt. Die Anforderungen an die Übertragung der Informationen der zweiten Kategorie sind nicht so streng; Verzögerungen im Sekundenbereich sind zulässig.

Personenbezogene Informationen betreffen jeweils nur eine bestimmte Person und auch nur diese soll die Nachricht erhalten. Funktional entspricht dieser Sendemodus dem eines herkömmlichen "Pager"-Systems. Informationsbeiträge aus dieser Gruppe werden in der Regel ein einziges Mal, zweckmäßigerweise jedoch im ganzen Gebiet, also in sämtlichen Informationsinseln gesendet, um zu gewährleisten, daß die adressierte Person die Information erhält. Es kann jedoch auch zweckmäßig sein, die personenbezogenen Informationen zwischenzuspeichern, um diese wiederholt senden zu können. Um eine Adressierung leichter vornehmen zu können, sollte jedes Handgerät eine individuelle Kennung besitzen und eine Zuordnung zwischen den Handgeräten und den Nutzern sollte bekannt sein.

Desweiteren können Audio-Informationen mit unterschiedlichen Bandbreiten und Dynamikbereichen übertragen werden. Mit Hilfe ebenfalls übertragener Steuerinformationen zur Identifikation der empfangenen Information, läßt sich diese entsprechend ihres Formates korrekt zurück in analoge Audiosignale umwandeln.

Fig. 2 zeigt schematisch den Aufbau einer Sendeeinrichtung 3. Die Sendeeinrichtung 3 ist modular aufgebaut und umfaßt in der dargestellten Ausführungsform drei Synthesizer 4a-4c und drei Modulatoren 5a-5c, deren Signale durch eine Kombinierschaltung 6 (Combiner) zusammengefaßt und einer Antenne zugeführt werden, sowie eine Steuereinrichtung 7.

Die Anzahl der Synthesizer 4a-4c und Modulatoren 5a-5c läßt sich an die zu übertragende Datenmenge anpassen. Jeder Synthesizer generiert ein Trägersignal und die zugeordneten Modulatoren ein entsprechendes HF-Signal.

Die Synthesizer 4a-4c und Modulatoren 5a-5c werden durch die Steuereinrichtung 7 gesteuert. Die Steuereinrichtung 7 ist mit einer lokalen Informationsspeichereinrichtung ausgestattet und über eine Ein-/Ausgabeschnittstelle mit einem Netzwerk verbunden. Über das Netzwerk werden nahezu alle Informationen, welche anschließend gesendet werden, von einer zentralen Bedienungseinrichtung bezogen. Eine Ausnahme bilden informationsinselspezifische Informationen, wie beispielsweise lokale Präsentationen. Diese können auch direkt über einen gesonderten, an der Steuereinrichtung vorgesehenen Eingang lokal eingegeben werden. Das Netzwerk wird ebenfalls dazu genutzt, um Status- und Fehlermeldungen zu übermitteln.

Die Informationsübertragung zwischen Sende- und Empfangseinrichtung erfolgt, insbesondere bei ereignisgesteuerten oder standortbezogenen Informationen, um ein Vielfaches schneller als deren Wiedergabe durch die Wiedergabeeinrichtung. Dabei werden zweckmäßigerweise auch bekannte Verfahren zur Datenreduktion angewandt.

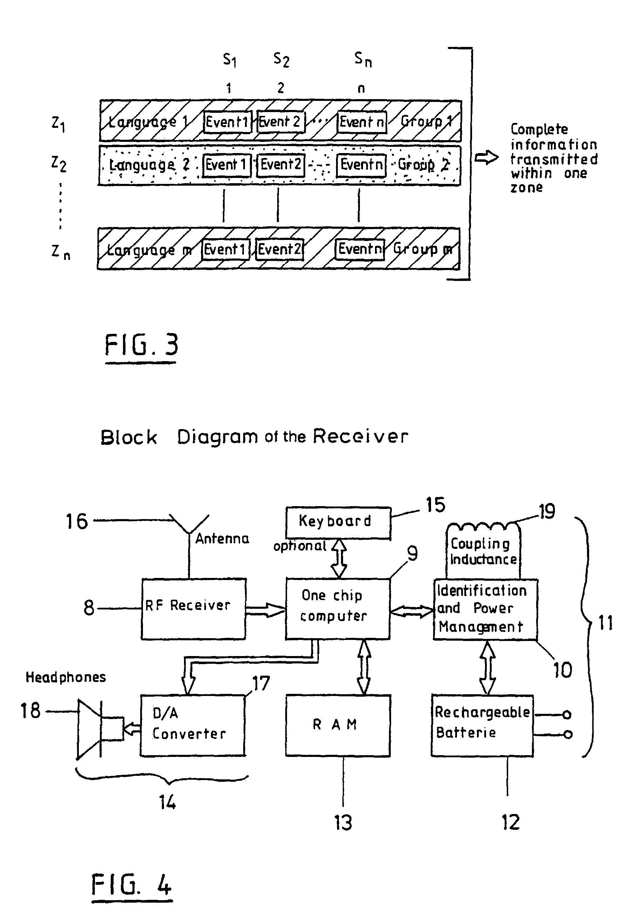

Fig. 3 zeigt ein Modulationsschema, wie es für die Übertragung sämtlicher Informationen in einer Informationsinsel Anwendung findet. Das Modulationsschema folgt dem Aufbau einer Tabelle mit Zeilen Z und Spalten S. Jeder Informationsbeitrag (Event) ist entsprechend seiner Sprache (language)einer Gruppe zugeordnet, welche in der Tabelle durch eine Zeile repräsentiert wird. Eine ganze Gruppe wird auf einem Trägersignal moduliert und gesendet. Für den Fall, daß die Anzahl der angebotenen Sprachen geringer ist als die Anzahl der Gruppen bzw. Trägersignale, dann kann eine Sprache auch mehrere Gruppen bzw. Trägersignale besetzen. Alternativ ist es ebenfalls möglich, daß mehrere oder sogar alle Sprachen auf einer Frequenz übertragen werden.

Fig. 4 zeigt den schematischen Aufbau eines Handgerätes 11 mit einer Empfangseinrichtung 8, einer Steuereinrichtung 9, einer Energieversorgungseinrichtung 10, einer (wiederaufladbaren) Batterie 12, einer Informationsspeichereinrichtung 13 und einer Wiedergabeeinrichtung 14. Optional kann das Handgerät 11 eine Tastatur 15 aufweisen, welche mit der Steuereinrichtung 9 in Verbindung steht.

Die Empfangseinrichtung bezieht ein HF-Signal über eine angeschlossene Empfangsantenne 16 und wandelt das empfangene HF-Signal in einen digitalen Datenstrom um, welcher im folgenden durch die Steuereinrichtung verarbeitet wird.

Die Steuereinrichtung 9, welche durch einen Ein-Chip-Computer oder ein DSP (digiter Signalprozessor) gebildet sein kann, identifiziert die empfangenen Informationen und verarbeitet diese entsprechend nach Art und Priorität. Z.B. werden standortbezogene Informationen in der Informationsspeichereinrichtung gespeichert, während Live-Informationen nicht oder nur kurz für wenige Sekungen oder Minuten gespeichert werden; wird eine Live-Information mit hoher Priorität, beispielsweise ein Warnhinweis, empfangen, so wird der momentan dem Nutzer übertragene Informationsbeitrag unterbrochen und die Information mit hoher Priorität wird direkt wiedergegeben.

Eine weitere Aufgabe der Steuereinrichtung 9 ist es, die in der Informationsspeichereinrichtung 13 gespeicherten standortbezogenen Informationen in Abhängigkeit von dem aktuellen Standort für eine Wiedergabe bereitzustellen.

Die Wiedergabeeinrichtung umfaßt einen D/A-Konverter 17, um digital kodierte akustische Informationen in ein analoges Signal umzuwandeln. Das analoge Signal wird dann einem Lautsprecher 18, einem Kopfhörer oder entsprechenden Anschlüssen zugeleitet.

Die Energieversorgung des Handgerätes kann über Primärzellen erfolgen. Wirschaftlicher sind jedoch wiederaufladbare Batterien, welche im Handgerät vorgesehen sind. Um die wiederaufladbaren Batterien laden zu können, beinhaltet die Energieversorgungseinrichtung 10 Ladekontakte, mit welchen das Handgerät 11 mit einer externen Energiequelle verbunden werden kann.

Das Handgerät umfaßt des weiteren ein Element 19 zur induktiven Kopplung, welches eine Schnittstelle zu äußeren Magnetfeldern darstellt. Dieses Kopplungselement 19 wird eingesetzt, um die durch Induktionsschleifen ausgestrahlten Standortinformationen aufzunehmen. Die so ermittelte Standortkennung, die alternativ auch mittels der optionalen Tastatur eingegeben oder durch eine Infrarot-Schnittstelle (nicht gezeigt) aufgenommen werden kann, wird von der Steuerungseinrichtung 9 genutzt, um den gewünschten Informationsbeitrag in der Informationsspeichereinrichtung zu finden. Jede andere Kopplung, z.B. kapazitiv , Transponder, elektromagnetisch, optisch etc., ist möglich.

Werden lediglich geringe Ladeströme für die wiederaufladbaren Batterien benötigt, so kann das Element zur induktive Kopplung auch in der Energieversorgungseinrichtung 10 vorgesehen sein. Es wäre dann möglich, zusätzlich über das Element von einer entsprechenden Ladestation galvanisch getrennt Energie fürdie wiederaufladbare Batterie des Handgerätes aufzunehmen.

Das Handgerät 11 kann zusätzlich mit einer Einrichtung zum Speichern einer Kennung der von dem Nutzer besuchten Standorte und/oder der wiedergegebenen informationsbeiträge umfassen. Mit der Kennung wird aufgezeichnet, welche Zeitspanne sich der Nutzer beispielsweise an einem bestimmten Standort aufgehalten hat. Alternativ ist es möglich, daß der Nutzer über eine entsprechende Schnittstelle ein Werturteil über die Qualität eines Standortes oder Informationsbeitrages abgibt, welches ebenfalls gespeichert wird. Wenn der Nutzer das Gebiet des Informationssystems verläßt oder das Handgerät 11 zurückgibt, werden die gespeicherten Daten ausgelesen und für statistische Zwecke verwendet. Zweckmäßigerweise werden diese Daten in einer Ausgabedatei zusammengefaßt, welche von einer externen Datenverarbeitungseinrichtung eingelesen und weiterverarbeitet werden kann.

Im Nahbereich kann über eine im Handgerät 11 vorgesehene IR(Infrarot)-Schnittstelle eine Übertragung der Informationen erfolgen. Diese kann sowohl als Ersatz als auch zusätzlich zu einer HF(Hochfrequenz)-Empfangseinrichtung eingesetzt sein. Geringe Datenmengen können daneben auch durch die Magnetschleifen ausgestrahlt und über das Element zur induktiven Kopplung zum Handgerät übertragen werden.

In einer alternativen Ausführungsform kann sogar komplett auf die HF-Empfangseinrichtung verzichtet werden. Die benötigten Daten können dann entweder über die vorstehend beschriebene IR-Schnittstelle oder beim Laden der Batterien über die Ladekontakte und eine entsprechende in der Energieversorgungseinrichtung vorgesehene Datenempfangseinrichtung an das Handgerät übermittelt werden. Bei einer solchen Ausführungsform ist die komplette HF-Infrastruktur nicht nötig, so daß ein derartiges Informationssystem sehr wirtschaftlich aufgebaut werden kann.

Mit dem Informationssystem lassen sich auch die Bewegungen der einzelnen Nutzer auf dem Gebiet des Informationssystems und innerhalb der einzelnen Informationsinseln on-line verfolgen. Dazu müssen die Handgeräte jeweils mit einer Sendeeinrichtung ausgestattet sein, welche automatisch, in vorgegebenem zeitlichen Abstand Kennungsimpulse aussendet. Eine solche Sendeeinrichtung kann beispielsweise mit HF- oder IR-Signalen arbeiten. Zusätzlich müssen dann auf dem Gebiet des Informationssystems entsprechende Empfangseinrichtungen verteilt und vernetzt werden, welche die Kennungsimpulse aufnehmen und zur Verarbeitung weiterleiten. Durch entsprechende Informationen, welche den Nutzern übermittelt werden, lassen sich dann die Bewegungen der Nutzer auf dem Gebiet steuern oder zumindest beeinflussen.

Sind die Handgeräte mit einer vorstehend beschriebenen Sendeeinrichtung ausgestattet und sind entsprechende Empfangseinrichtungen auf dem Gebiet verteilt, dann können diese Einrichtungen auch aktiv durch den Nutzer benutzt werden.

Damit kann der Nutzer beispielsweise Vorrichtungen starten bzw. steuern oder drahtlos an einer Abstimmung teilnehmen.

Der Nutzer kann das Handgerät mit einer speziellen Sendeeinrichtung auch außerhalb des Informationssystems, beispielsweise in seiner privaten Umgebung, besonders vorteilhaft als drahtlosen (Digital) Kopfhörer einsetzen.

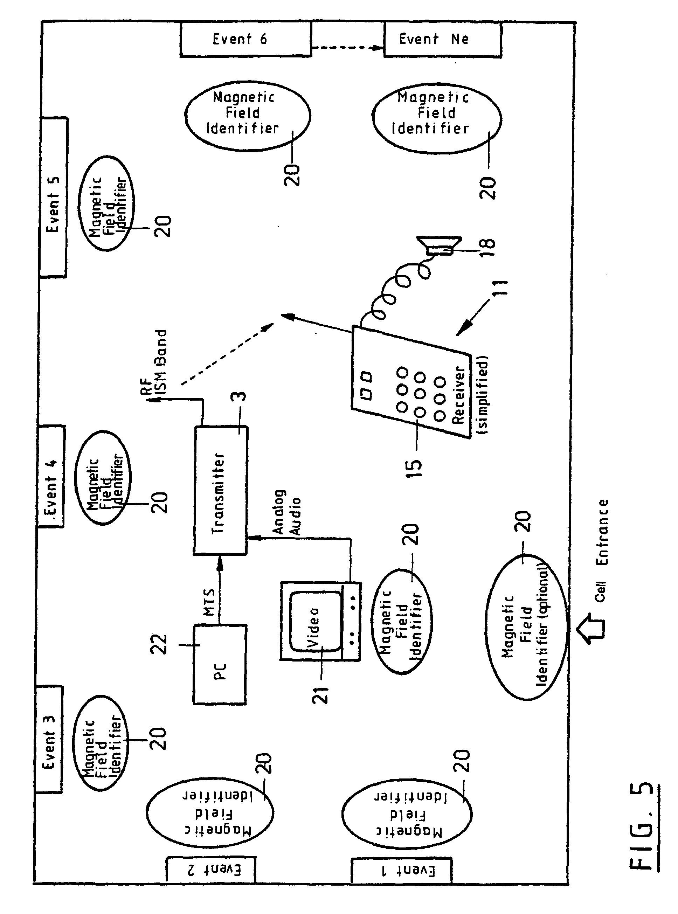

Fig. 5 zeigt beispielhaft einen Aufbau einer Informationsinsel (Zelle). Mehrere Standorte - Events 1 ... N -, zu denen jeweils ein Informationsbeitrag in den verschiedenen Sprachen wiedergegeben werden kann, sind jeweils mit einem Signalgeber ausgestattet. Die Signalgeber erzeugen magnetische Felder 20, welche zur Übertragung einer Standortkennung an das Handgerät 11 dienen. Optional kann ein solcher Signalgeber zusätzlich an jedem Zugang zur Informationsinsel angeordnet sein. In diesem Fall wird die Standortkennung dazu genutzt, um dem Handgerät einen Wechsel des aktuellen Standortes von einer Informationsinsel zu einer anderen anzuzeigen. Eine Auswahl eines Informationsbeitrages hat in diesem Fall nicht zwingend zu erfolgen.

Ist ein Signalgeber an einem Standort angeordnet, zu dem Live-Informationen angeboten werden, - in Fig. 5 beispielhaft durch einen Monitor 21 dargestellt - dann wählt das Handgerät 11 die entsprechenden Live-Informationen aus, so daß diese dem Nutzer automatisch oder nach manueller Anforderung wiedergegeben werden können. Die inselspezifischen Live-Informationen können lokal über einen analogen Audioeingang in die Sendeeinrichtung 3 eingespeist werden. Alle übrigen Informationsbeiträge liegen bereits in gespeicherter Form auf einem der Sendeeinrichtung zugeordneten Computer 22 vor oder werden über ein Netzwerk von einer zentralen Bedienungseinrichtung (nicht dargestellt) bezogen.

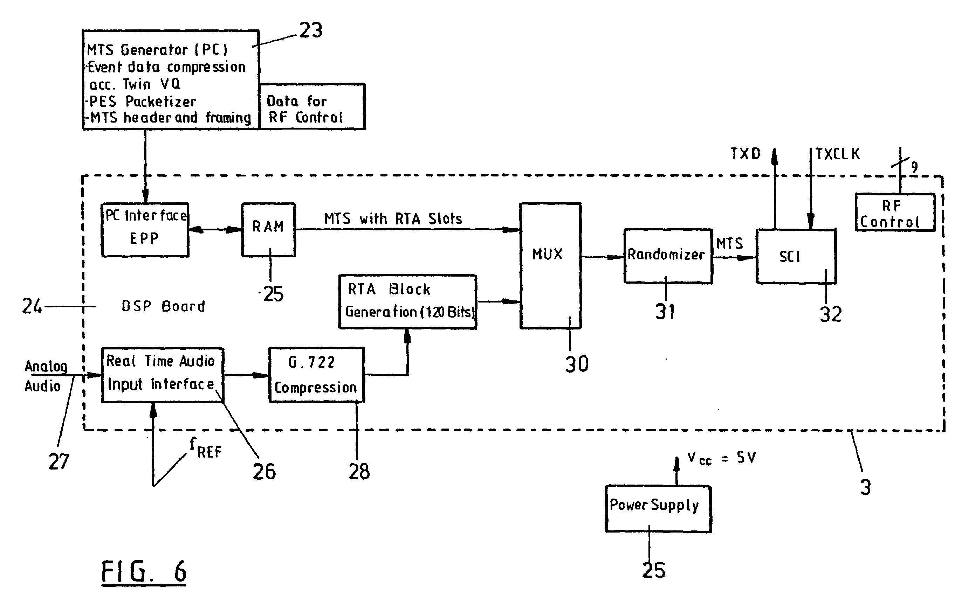

Fig. 6 zeigt ein funktionales Blockdiagramm einer möglichen Ausführungsform der erfindungsgemäßen Sendeeinrichtung 3. Die Sendeeinrichtung umfaßt einen Multiplex-Transport-Stream-Generator 23 (MTS-Generator), eine HF-Einheit, eine DSP basierte Echtzeit-Signalverarbeitungs- und Steuereinheit 24 und eine Energieversorgungseinrichtung 25.

Der MTS-Generator ist in der dargestellten Ausführungsform durch einen Computer realisiert und erzeugt aus den standortbezogenen Informationen mittels Datenreduktion nach dem TwinVQ-Verfahren und Bilden von Abschnitten vorgegebener Länge MTS-Datenblöcke. Bei Anwendung einer Multizellenstruktur, die mehrere Informationsinseln umfaßt, und dem Einsatz eines Netzwerkes zur zentralen Versorgung der Informationszellen mit Daten, kann die Bildung der MTS-Datenblöcke ebenfalls in einer zentralen Recheneinrichtung erfolgen. Die MTS-Datenblöcke werden dann lediglich über das Netzwerk an die einzelnen Informationsinseln übertragen. Die MTS-Datenblöcke umfassen zusätzlich MTS-Steuerinformationen für deren Identifizierung und Datenfenster (slots) für Real-Time-Audio-Daten. Desweiteren werden Steuerdaten für eine HF-Steuerung von dem Computer an die DSP-Einheit 24 übermittelt. Die MTS-Datenblöcke werden über eine parallele Schnittstelle von dem MTS-Generator in die DSP-Einheit 24 übertragen und dort in einem (Direktzugriff) Speicher (RAM) gespeichert.

Über einen analogen Audioeingang und eine Real-Time-Audio-Schnittstelle 26 (RTA-Schnittstelle) können der DSP-Einheit 29 Live-Informationen zugeführt werden, welche kontinuierlich mit einer möglichst geringen Zeitverzögerung an die Handgeräte 11 übertragen werden sollen. In der RTA-Schnittstelle wird das analoge Audiosignal 27 digitalisiert und anschließend mittels einer Datenkompressoreinrichtung 28 einer Datenkompression unterzogen, welche nach dem G.722-Verfahren (CCITT Richtlinien) arbeiten kann. Nach der Datenkompression werden in einem RTA-Block-Generator 29 RTA-Datenblöcke gebildet.

Die DSP-Einheit 24 wiederholt zyklisch das Senden der einzelnen MTS-Datenblöcke aus dem RAM 25. Dabei werden die Datenblöcke in Form eines Datenstroms gesendet, wobei die jeweils aktuellen RTA-Datenblöcke durch einen Multiplexer 30 in die vorgegebenen Datenfenster der MTS-Datenblöcke eingefügt werden.

Um in dem MTS-Datenstrom lange Sequenzen von aufeinanderfolgenden Nullen oder Einsen, welche sich bei einer Modulation in der HF-Einheit und bei der Demodulation in einer Empfangseinrichtung negativ auswirken können, zu verhindern, wird der Datenstrom zu einer Randomisiserungs-Einrichtung 31 geleitet. In der Randomisierungseinrichtung wird zu dem MTS-Datenstrom eine Pseudo-Random-Binary-Sequenz in Modulo-2-Arithmetik addiert, wobei die für eine Synchronisation wichtigen Abschnitte eines MTS-Datenblockes unverändert bleiben.

Anschließend wird der Datenstrom über eine serielle Kommunikationsschnittstelle 32 (Serial Communication Interface, SCI) der HF-Einheit zugeführt, wobei durch Synchronisationssignale gewährleistet wird, daß sich die Frequenz des MTS-Datenstroms synchron zur Referenzfrequenz verhält.

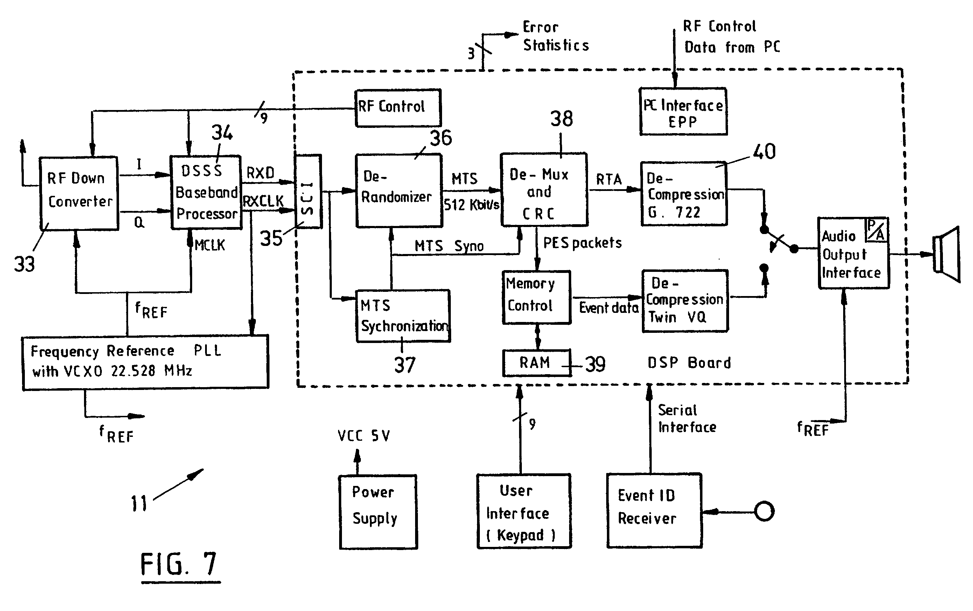

In Fig. 7 ist ein Blockdiagramm einer besonderen Ausführungsform des Handgerätes 11 dargestellt. Nach einer Konvertierung eines empfangenen HF-Signals in einer HF-Down-Konvertierungseinrichtung 33 erfolgt in einer Demondulation 34 eine Demodulation, bevor der gewonnene Datenstrom über eine serielle Kommunikationsschnittstelle 35 einer De-Randomisierungseinrichtung 36 und einer MTS-Synchronisationseinrichtung 37 zugeführt wird.

Die De-Randomisierungseinrichtung 36 kehrt die vor dem Senden durchgeführte Randomisierung dadurch um, daß zu dem MTS-Datenstrom exakt die gleiche Pseudo-Random-Binary-Sequence in Modulo-2-Arithmetik addiert wird, wobei die für eine Synchronisation wichtigen Abschnitte eines MTS-Datenblockes wie bei der Randomisierung unverändert bleiben.

In einer Demultiplex- und Fehlererkennungseinrichtung 38 werden zuerst die MTS-Steuerungsdaten auf Fehler untersucht. Dies kann durch ein Cyclic-Redundancy-Check-Verfahren (CRC) geschehen. Dann werden die MTS-Datenblöcke, welche zu der ausgewählten Sprache gehören, extrahiert. Bevor diese allerdings durch eine Speichersteuerungseinrichtung 39 in einem (Direktzugriffs)Speicher gespeichert werden, wird das CRC-Verfahren zur Fehlererkennung auf dem entsprechenden Datenblock ausgeführt. An dieser Stelle können auch andere bekannte Verfahren zur Fehlerkorrektur eingesetzt werden. Eine Speicherung findet nicht statt, wenn Fehler erkannt wurden.

Die Speicherungsprozedur für die Datenblöcke eines Informationsbeitrages beginnt immer mit dem ersten Datenblock. Der erste - und jeder weitere - Datenblock ist durch den First-Packet-Indicator (FPI), welcher in den Blocksteuerungsdaten vorgesehen ist, gekennzeichnet. Desweiteren enthalten die Blocksteuerungsdaten eine fortlaufende Numerierung der einzelnen Datenblöcke, die zu einem Informationsbeitrag gehören und zwar in absteigender oder ansteigender Ordnung.

Der erste Datenblock kennzeichnet somit gleichzeitig die gesamte Anzahl an Datenblöcken des entsprechenden Informationsbeitrages, so daß die Speichersteuerungseinrichtung nach Empfang des ersten Datenblockes eines Informationsbeitrages den gesamten für die Speicherung dieses Datenblockes benötigten Speicher reservieren kann. Die einzelnen Datenblöcke werden entsprechend ihrer Numerierung in den vorgesehenen Speicherbereichen gespeichert. Fehlerhaft empfangene Datenblöcke werden nicht gespeichert; der für den fehlerhaften Datenblock vorgesehene Speicherbereich wird jedoch freigehalten und bei einem nächsten Sendezyklus desselben Informationsbeitrages komplettiert. Eine Statusanzeigeeinrichtung zeigt an, ob sämtliche Datenblöcke korrekt empfangen sind. Die Statusanzeigeeinrichtung kann beispielsweise durch eine oder mehrere rot und/oder grün leuchtende LEDs gebildet werden.

Für den Fall, daß Live-Audio-Informationen wiedergegeben werden sollen, werden die aus den Datenfenstern der MTS-Datenblöcke extrahierten RTA-Datenblöcke direkt an eine G.722-Dekompressionseinrichtung 40 weitergeleitet. Von dort gelangen die RTA-Datenblöcke zur Audio-Wiedergabe-Schnittstelle und werden wieder in analoge Audiosignale umgewandelt.

Soll ein standortbezogener Informationsbeitrag wiedergegeben werden, wählt die Speichersteuerungseinrichtung die entsprechenden Datenblöcke aus dem Speicher aus und leitet diese an eine TwinVQ-Dekompressionseinrichtung 41 weiter und von dort gelangen die Datenblöcke zur Audio-Wiedergabe-Schnittstelle.

Da der empfangene RTA-Datenstrom exakt mit der gleichen Datenrate verarbeitet werden muß, in welcher dieser gesendet wurde, wird der D/A-Konverter durch die in der HF-Einheit des Handgerätes gebildete Referenzfrequenz f_{REF} getaktet.

Die vorbeschriebene Erfindung läßt sich in verschiedensten Gebieten anwenden wie beispielsweise als integratives Führungs- und Informationssystem für Museen, Messen, Freizeitparks, allgemeine Sehenswürdigkeiten, Regionen. Sie läßt sich auch in Übersetzungsanlagen, Konferenzanlagen oder Suchsystemen aber auch zur Unterstützung für Blinde und Schwerhörige einsetzen. Mittels der Erfindung erhält der Anwender (Benutzer/Besucher) gezielt Informationen, die primär akustischer Natur sind.

## Patentansprüche

1. Informationssystem zum Versorgen eines vorgegebenen Gebietes mit Informationen, mit
einer Sendeeinrichtung (3) zum Senden von Informationen in digital kodierter Form, einem Handgerät (11), welches
eine Empfangseinrichtung (8) zum Empfangen der von der Sendeeinrichtung (3) gesendeten Informationen,
eine digitale Speichereinrichtung (13) zum Speichern der empfangenen Informationen, eine Wiedergabeeinrichtung (17, 18) zum Wiedergeben der gespeicherten Informationen, insbesondere auf akustische und/oder optische Weise, und
eine Ereigniserkennungseinrichtung (9) zum Erkennen bestimmter Ereignisse, umfaßt,
die bei Erkennen eines Ereignisses aus den gespeicherten Informationen diejenigen für eine Wiedergabe auswähit, welche dem erkannten Ereignis zugeordnet sind.

2. Informationssystem nach Anspruch 1,
**dadurch gekennzeichnet, daß** die Übertragung der Information von der Sendeeinrichtung zur Empfangseinrichtung schneller erfolgt, als eine anschließende Wiedergabe durch die Wiedergabeeinrichtung.

3. Informationssystem nach Anspruch 1 oder 2,
**dadurch gekennzeichnet, daß** die Informationen mehrsprachig sind.

4. Informationssystem nach Anspruch 3,
**dadurch gekennzeichnet, daß** das Handgerät eine Auswahleinrichtung zum Auswählen einer der Sprachen, in denen die Informationen gesendet werden, aufweist.

5. Informationssystem nach Anspruch 4,
**dadurch gekennzeichnet, daß** nur diejenigen Informationen in der Speichereinrichtung des Handgerätes gespeichert werden, welche die mittels der Auswahleinrichtung ausgewählte Sprache aufweisen.

6. Informationssystem nach einem der vorstehenden Ansprüche,
**dadurch gekennzeichnet, daß** die Ereigniserkennungseinrichtung eine Standortbestimmungseinrichtung zum Bestimmen des aktuellen Standortes umfaßt, wobei das Ereignis, zu dem die zugeordneten Informationen ausgewählt werden, im Erreichen eines bestimmten Standortes liegt.

7. Informationssystem nach Anspruch 6,
**dadurch gekennzeichnet, daß** die Standortbestimmungseinrichtung Signale zum Bestimmen des Standortes empfängt, welche von Signalgebern ausgesandt werden, die in dem Gebiet an vorgegebenen Standorten angeordnet sind.

8. Informationssystem nach Anspruch 7,
**dadurch gekennzeichnet, daß** die Signalgeber durch Infrarot-Sender und/oder Induktionsgeber gebildet werden, welche jeweils ein den Standort kennzeichnendes Signal aussenden.

9. Informationssystem nach einem der vorstehenden Ansprüche,
**dadurch gekennzeichnet, daß** das Gebiet in mehrere Informationsinseln aufgeteilt ist, in denen jeweils eine Sendeeinrichtung angeordnet ist.

10. Informationssystem nach Anspruch 9,
**dadurch gekennzeichnet, daß** die Sendeeinrichtung jeweils die Informationen sendet, welche Ereignissen zugeordnet sind, die in der jeweiligen Informationsinsel auftreten können.

11. Verfahren zum Versorgen eines vorgegebenen Gebietes mit Informationen, bei welchem
Informationen in digital kodierter Form von einer Sendeeinrichtung (3) gesendet und von einer in einem Handgerät (11) enthaltenen Empfangseinrichtung (8) empfangen und in einer digitalen Speichereinrichtung (13) des Handgerätes gespeichert werden, wobei bei Erkennen eines Ereignisses aus den gespeicherten Informationen diejenigen für eine Wiedergabe, insbesondere auf akustische oder optische Weise, ausgewählt werden, welche dem erkannten Ereignis zugeordnet sind.

12. Verfahren nach Anspruch 11,
**dadurch gekennzeichnet, daß** die Übertragung der Information von der Sendeeinrichtung zur Empfangseinrichtung schneller erfolgt, als eine anschließende Wiedergabe durch die Wiedergabeeinrichtung.

13. Verfahren nach Anspruch 11 oder 12,
**dadurch gekennzeichnet, daß** die Informationen mehrsprachig sind.

14. Verfahren nach Anspruch 13,
**dadurch gekennzeichnet, daß** am Handgerät eine der Sprachen ausgewählt wird, in denen die Informationen gesendet werden.

15. Verfahren nach Anspruch 14,
**dadurch gekennzeichnet, daß** nur diejenigen Informationen in der Speichereinrichtung des Handgerätes gespeichert werden, welche die ausgewählte Sprache aufweisen.

16. Verfahren nach einem der Ansprüche 11 bis 15,
**dadurch gekennzeichnet, daß** das Ereignis, zu dem die zugeordneten Informationen ausgewählt werden, im Erreichen eines bestimmten Standortes liegt.

17. Verfahren nach Anspruch 16,
**dadurch gekennzeichnet, daß** der Standort durch Signale bestimmt wird, welche von Signalgebern ausgesandt werden, die in dem Gebiet an vorgegebenen Standorten angeordnet sind.

18. Verfahren nach einem der Ansprüche 11 bis 17,
**dadurch gekennzeichnet, daß** das Gebiet in mehrere Informationsinseln aufgeteilt ist, in denen jeweils die Informationen gesendet werden, welche Ereignissen zugeordnet sind, die in der jeweiligen Informationsinsel auftreten können.

19. Verfahren nach einem der Ansprüche 11 bis 18,
**dadurch gekennzeichnet, daß** Informationen mit unterschiedlicher Prioritätskennung gesendet werden, wobei Informationen mit einer höheren Prioritätskennung, beispielsweise Warnhinweise, bevorzugt wiedergegeben werden.

20. Verfahren nach einem der Ansprüche 11 bis 19,
**dadurch gekennzeichnet, daß** zusammenhängende Informationsbeiträge in einzelnen Abschnitten gesendet werden, wobei jeweils die Anfangsabschnitte der Informationsbeiträge wiederholt in kurzen Zeitspannen gesendet werden, um nach Betreten einerinformationsinsel möglichst schnell zumindest die Anfangsabschnitte der Informationsbeiträge im Handgerät gespeichert zu haben, und die folgenden Abschnitte für eine spätere Wiedergabe gespeichert werden, wenn die Wiedergabe des ersten Abschnittes bereits begonnen hat.

21. Handgerät zum Empfangen, Speichern und Wiedergeben von Informationen in einem Informationssystem nach einem der Ansprüche 1 bis 10, mit
einer Empfangseinrichtung (8) zum Empfangen von digital kodierten Informationen, einer digitalen Speichereinrichtung (13) zum Speichern der empfangenen Informationen, einer Wiedergabeeinnchtung (17, 18) zum Wiedergeben der gespeicherten Informationen, insbesondere auf akustische und/oder optische Weise, und
einer Ereigniserkennungseinrichtung (9) zum Erkennen bestimmter Ereignisse, die bei Erkennen eines Ereignisses aus den gespeicherten Informationen diejenigen für eine Wiedergabe auswählt, welche dem erkannten Ereignis zugeordnet sind.

## Claims

1. Information system for supplying a prescribed region with information having,
a transmission device (3) for transmitting information in digitally coded form,
a hand-held appliance (11) which comprises
a reception device (8) for receiving the information transmitted by the transmission device (3),
a digital memory device (13) for storing the received information, I
a reproduction device (17, 18) for reproducing the stored information, particularly audibly and/or visually, and
an event recognition device (9) for recognizing particular events which, upon recognizing an event, selects from the stored information the information associated with the recognized event for the purpose of reproduction.

2. Information system according to Claim 1,
**characterized in that** the information is transmitted from the transmission device to the reception device faster than subsequent reproduction by the reproduction device.

3. Information system according to Claim 1 or 2,
**characterized in that** the information is multilingual.

4. Information system according to Claim 3,
**characterized in that** the hand-held appliance has a selection device for selecting one of the languages in which the information is transmitted.

5. Information system according to Claim 4,
**characterized in that** the memory device in the hand-held appliance stores only the information which is in the language selected by means of the selection device.

6. Information system according to one of the preceding claims,
**characterized in that** the event recognition device comprises a position-finding device for finding the current position, with the event for which the associated information is selected being arrival at a particular position.

7. Information system according to Claim 6,
**characterized in that** the position-finding device receives position-finding signals which are emitted by signal generators arranged at prescribed positions in the region.

8. Information system according to Claim 7,
**characterized in that** the signal generators are formed by infrared transmitters and/or induction generators which respectively emit a signal **characterizing** the position.

9. Information system according to one of the preceding claims,
**characterized in that** the region is split into a plurality of information islands which respectively contain a transmission device.

10. Information system according to Claim 9,
**characterized in that** the transmission device respectively transmits the information which is associated with events which can occur in the respective information island.

11. Method for supplying a prescribed region with information, in which
information in digitally coded form is transmitted by a transmission device (3) and is received by a reception device (8) contained in a hand-held appliance (11) and is stored in a digital memory device (13) in the hand-held appliance, where, upon recognition of an event, the information associated with the recognized event is selected from the stored information for the purpose of reproduction, particularly audibly or visually.

12. Method according to Claim 11,
**characterized in that** the information is transmitted from the transmission device to the reception device faster than subsequent reproduction by the reproduction device.

13. Method according to Claim 11 or 12,
**characterized in that** the information is multilingual.

14. Method according to Claim 13,
**characterized in that** one of the languages in which the information is transmitted is selected on the hand-held appliance.

15. Method according to Claim 14,
**characterized in that** the memory device in the hand-held appliance stores only the information which is in the selected language.

16. Method according to one of Claims 11 to 15,
**characterized in that** the event for which the associated information is selected is arrival at a particular position.

17. Method according to Claim 16,
**characterized in that** the position is determined by signals which are emitted by signal generators arranged at prescribed positions in the region.

18. Method according to one of Claims 11 to 17,
**characterized in that** the region is split into a plurality of information islands in which the information associated with events which can arise in the respective information island is respectively transmitted.

19. Method according to one of Claims 11 to 18,
**characterized in that** information is transmitted with different priority identifiers, and information with a relatively high priority identifier, for example warnings, is reproduced with preference.

20. Method according to one of Claims 11 to 19,
**characterized in that** cohesive information contributions are transmitted in individual sections, with the respective initial sections of the information contributions being transmitted repeatedly at short intervals of time so that, when an information island has been entered, at least the initial sections of the information contributions are stored in a hand-held appliance as quickly as possible, and the subsequent sections are stored for later reproduction if reproduction of the first section has already begun.

21. Hand-held appliance for receiving, storing and reproducing information in an information system according to one of Claims 1 to 10, having
a reception device (8) for receiving digitally coded information,
a digital memory device (13) for storing the received information,
a reproduction device (17, 18) for reproducing the stored information, particularly audibly and/or visually, and
an event recognition device (9) for recognizing particular events which, upon recognizing an event, selects the information associated with the recognized event from the stored information for the purpose of reproduction.

## Revendications

1. Système d'information pour fournir des informations à une zone prédéterminée, comprenant :
- un dispositif émetteur (3) pour l'émission d'informations dans une forme codée numériquement,
- : un appareil portable (11), qui comprend :
un dispositif récepteur (8) pour recevoir les informations émises par le dispositif émetteur (3),
un dispositif de mémorisation numérique (13) pour mémoriser les informations reçues,
un dispositif de retransmission (17, 18) pour retransmettre les informations mémorisées, en particulier de manière acoustique et/ou optique, et
un dispositif de reconnaissance d'événement (9) pour reconnaître des événements déterminés, lequel, lors de la reconnaissance d'un événement, sélectionne pour une retransmission parmi les informations mémorisées celles qui sont affectées à l'événement reconnu.

2. Système d'information selon la revendication 1, **caractérisé en ce que** la transmission de l'information depuis le dispositif émetteur jusqu'au dispositif récepteur s'effectue plus rapidement qu'une retransmission consécutive par le dispositif de retransmission.

3. Système d'information selon l'une quelconque des revendications 1 ou 2, **caractérisé en ce que** les informations sont multilingues.

4. Système d'information selon la revendication 3, **caractérisé en ce que** l'appareil portable présente un dispositif de sélection pour sélectionner une des langues dans lesquelles les informations sont émises.

5. Système d'information selon la revendication 4, **caractérisé en ce que** seules sont mémorisées dans le dispositif de mémorisation de l'appareil portable les informations qui présentent la langue sélectionnée au moyen du dispositif de sélection.

6. Système d'information selon l'une quelconque des revendications précédentes, **caractérisé en ce que** le dispositif de reconnaissance d'événement comprend un dispositif de détermination de lieu pour déterminer le lieu effectif, l'événement à la suite, duquel les informations affectées sont sélectionnées étant situé à portée d'un lieu déterminé.

7. Système d'information selon la revendication 6, **caractérisé en ce que** le dispositif de détermination de lieu reçoit des signaux pour déterminer le lieu, qui sont émis par des émetteurs de signaux qui sont agencés dans la zone à des lieux prédéterminés.

8. Système d'information selon la revendication 7, **caractérisé en ce que** les émetteurs de signaux sont formés par des émetteurs à infrarouge et/ou des inducteurs, qui émettent chacun un signal caractérisant le lieu.

9. Système d'information selon l'une quelconque des revendications précédentes, **caractérisé en ce que** la zone est divisée en une pluralité d'îlots d'information dans chacun desquels un dispositif émetteur est agencé.

10. Système d'information selon la revendication 9, **caractérisé en ce que** le dispositif émetteur émet à chaque fois les informations qui sont affectées à des événements qui peuvent survenir dans l'îlot d'information respectif.

11. Procédé pour fournir des informations à une zone prédéterminée, dans lequel des informations dans une forme codée numériquement sont émises par un dispositif émetteur (3), reçues par un dispositif récepteur (8) contenu dans un appareil portable (11) et mémorisées dans un dispositif de mémorisation numérique (13) de l'appareil portable, où lors de la reconnaissance d'un événement, les informations qui sont affectées à l'événement reconnu sont sélectionnées parmi les informations mémorisées pour une retransmission, en particulier de manière acoustique ou optique.

12. Procédé selon la revendication 11, **caractérisé en ce que** la transmission de l'information depuis le dispositif émetteur jusqu'au dispositif récepteur s'effectue plus rapidement qu'une retransmission consécutive par le dispositif de retransmission.

13. Procédé selon l'une quelconque des revendications 11 ou 12, **caractérisé en ce que** les informations sont multilingues.

14. Procédé selon la revendication 13, **caractérisé en ce qu'**une des langues dans lesquelles les informations sont émises est sélectionnée sur l'appareil portable.

15. Procédé selon la revendication 14, **caractérisé en ce que** seules sont mémorisées dans le dispositif de mémorisation de l'appareil portable les informations qui présentent la langue sélectionnée.

16. Procédé selon l'une quelconque des revendications 11 à 15, **caractérisé en ce que** l'événement à la suite duquel les informations affectées sont sélectionnées est situé à portée d'un lieu déterminé.

17. Procédé selon la revendication 16, **caractérisé en ce que** le lieu est déterminé par des signaux qui sont émis par des émetteurs de signaux qui sont agencés dans la zone à des lieux prédéterminés.

18. Procédé selon l'une quelconque des revendications 11 à 17, **caractérisé en ce que** la zone est divisée en une pluralité d'îlots d'information dans lesquels sont émises à chaque fois les informations qui sont affectées à des événements qui peuvent survenir dans l'îlot d'information respectif.

19. Procédé selon l'une quelconque des revendications 11 à 18, **caractérisé en ce que** des informations ayant un marquage de priorité différent sont émises, les informations ayant un marquage de priorité supérieur, par exemple des messages d'avertissement, sont retransmises par préférence.

20. Procédé selon l'une quelconque des revendications 11 à 19, **caractérisé en ce que** des lots d'informations connexes sont émis en segments individuels, sachant que les segments de début des lots d'informations sont à chaque fois émis de manière répétée à de brefs intervalles afin que, après la pénétration dans un îlot d'information, au moins les segments de début des lots d'information soient mémorisés le plus rapidement possible dans l'appareil portable, et que les segments suivants soient mémorisés pour une retransmission ultérieure lorsque la retransmission des premiers segments a déjà commencé.

21. Appareil portable pour recevoir, mémoriser et retransmettre des informations dans un système d'information selon l'une quelconque des revendications 1 à 10, comprenant un dispositif récepteur (8) pour recevoir des informations codées numériquement, un dispositif de mémorisation numérique (13) pour mémoriser les informations reçues, un dispositif de retransmission (17, 18) pour retransmettre les informations mémorisées, en particulier de manière acoustique et/ou optique, et un dispositif de reconnaissance d'événement (9) pour reconnaître des événements déterminés, lequel, lors de la reconnaissance d'un événement, sélectionne pour une retransmission parmi les informations mémorisées celles qui sont affectées à l'événement reconnu.
